(19) Europäisches Patentamt / European Patent Office / Office européen des brevets

(11) **EP 4 439 686 A1**

(12) **EUROPEAN PATENT APPLICATION**

(43) Date of publication:
**02.10.2024 Bulletin 2024/40**

(21) Application number: **23209096.9**

(22) Date of filing: **10.11.2023**

(51) International Patent Classification (IPC):
*H01M 4/04* (2006.01)  *H01M 4/133* (2010.01)
*H01M 4/134* (2010.01)  *H01M 4/1393* (2010.01)
*H01M 4/1395* (2010.01)  *H01M 4/36* (2006.01)
*H01M 4/38* (2006.01)  *H01M 4/587* (2010.01)

(52) Cooperative Patent Classification (CPC):
**H01M 4/386; H01M 4/0421; H01M 4/133;
H01M 4/134; H01M 4/1393; H01M 4/1395;
H01M 4/366; H01M 4/587;** H01M 10/0525;
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2023 CN 202310342950**

(71) Applicant: **AESC Japan Ltd.**
**Kanagawa, 2520012 (JP)**

(72) Inventors:
• **HUANG, Peng**
**Pudong New Area Shanghai, 201315 (CN)**
• **LI, Ruonan**
**Pudong New Area Shanghai, 201315 (CN)**
• **SUN, Zhonggui**
**Pudong New Area Shanghai, 201315 (CN)**
• **SUN, Huayu**
**Pudong New Area Shanghai, 201315 (CN)**

(74) Representative: **Becker, Eberhard**
**Becker Kurig & Partner**
**Patentanwälte mbB**
**Bavariastraße 7**
**80336 München (DE)**

(54) **SILICON-CARBON COMPOSITE MATERIAL, PREPARATION METHOD THEREOF, ELECTROCHEMICAL DEVICE AND ELECTRONIC APPARATUS**

(57) A silicon-carbon composite material, a preparation method thereof, an electrochemical device, and an electronic apparatus are provided. The silicon-carbon composite material includes an inner core and a carbon coating layer. The inner core includes a carbon substrate and silicon and carbon nanoparticles attached to a surface of the carbon substrate and/or an inner portion of the carbon substrate. An accessible porosity R is 20% to 80%. The preparation method includes co-depositing, by using a gaseous carbon source/silicon source carbon, carbon and silicon on the carbon substrate through a first chemical vapor deposition and forming, by using a carbon source, the carbon coating layer on a surface through a second chemical vapor deposition.

**Description**

**BACKGROUND**

Technical Field

The disclosure relates to the technical field of secondary batteries, and in particular, relates to a silicon-carbon composite material and a preparation method thereof, an electrochemical device, and an electronic apparatus.

Description of Related Art

Energy-saving and new energy vehicles are one of the top ten fields of Made in China 2025, and in order to accelerate the cultivation and development of energy-saving and new energy vehicles, pure electric drive has become the main strategic orientation for the development of new energy vehicles and the transformation of the automobile industry. Relevant technical indicators clearly require that the energy density of a battery cell is to be greater than or equal to 300 Wh/kg, the cycle life to be greater than or equal to 1500 times, and the specific capacity of the related negative electrode material needs to reach 600 mAh/g. At present, the negative electrode material used for most of the commercialized power lithium-ion batteries is still graphite. However, the energy density of graphite has been developed to be close to the theoretical level (372 mAh/g), so graphite can no longer satisfy the needs of the development of power lithium-ion batteries nowadays. Silicon provides the highest lithium storage capacity (4200 mAh/g) as a negative electrode material for lithium-ion batteries. During the charging and discharging process, the possibility of lithium plating is low, so silicon has the advantage of high safety performance, but silicon also has some disadvantages. The volume expansion of silicon during the lithiation process is as high as 400%, which results in pulverization, collapse, and short cycle life of the material. Silicon has low electron mobility ($1350 \, cm^2V^{-1}S^{-1}$) and low thermal conductivity ($148 \, m^{-1}K^{-1}$), resulting in poor rate performance and poor stability of the material. Through the nanonization of the silicon material and the modification of carbon coating, the performance of batteries with silicon as the negative electrode material can be effectively improved. By combining the advantages and disadvantages of conventional graphite and silicon as lithium-ion battery materials, using nanosized silicon to compound with the graphite material, and performing modification through carbon coating, the electrochemical performance of graphite as the negative electrode material may be improved.

At present, several methods commonly used to prepare a silicon-carbon composite material include high-energy ball milling, chemical vapor deposition, sol-gel method, and high-temperature pyrolysis. Among these methods, the high-energy ball milling method and the chemical vapor deposition method are more suitable for industrial production. The ball milling method is simple, and the preparation costs are low. However, in the ball milling process, the particle size of silicon is difficult to reach the nanometer level, and it is difficult to disperse silicon in graphite powder, so homogeneous agglomeration (silicon and silicon agglomeration or graphite and graphite agglomeration) is prone to occur. The uneven dispersion of silicon and the large size of silicon will affect the cycle stability of the battery. In the chemical vapor deposition method, a silicon source or a carbon source is used to deposit a nanometer layer on an existing substrate to prepare a silicon-carbon composite material. The most common source of silicon is silane. Some studies have used the chemical vapor deposition method to deposit a silicon nanowire array on a copper foil. The obtained material maintains a capacity of 3500 mAh/g after 20 cycles at a current density of 0.2 A/g, which is close to the theoretical capacity.

The chemical vapor deposition method exhibits high industrialization potential, but defects such as complicated preparation steps, poor quality stability of product preparation, and poor cycle stability of finished materials can still be found. When a silicon-carbon composite material is prepared by the conventional chemical vapor deposition method, pure carbon or a silicon substrate is generally used as the substrate, and silicon or carbon is deposited on the surface to mix the two phases. Such a method mainly brings the following problems. 1. The preparation process steps are cumbersome, and deposition is required to be repeatedly performed by using multiple devices most of the time to complete the material preparation. Further, the stability of product quality of the finished product is poor, so this method is not suitable for large-scale industrial production. 2. The two phases of carbon and silicon in the finished product material are not tightly connected, and the cycle stability is poor.

**SUMMARY**

In view of the abovementioned shortcomings found in the related art, the disclosure aims to provide a silicon-carbon composite material, a preparation method thereof, an electrochemical device, and an electronic apparatus, so as to provide a silicon-carbon composite material exhibiting high comprehensive performance (such as high mass specific capacity and high cycle stability) for a negative electrode of an electrochemical energy storage device such as a lithium-ion battery to solve the problems of complicated preparation steps, poor stability of quality during product preparation, poor cycle stability of a finished product material, and other problems found in the conventional chemical vapor deposition method used in the related art.

To achieve the above objects and another corresponding objects, the first aspect of the disclosure provides a silicon-carbon composite material. The silicon-carbon composite material includes an inner core and a carbon coating layer covering the inner core. The inner core includes a carbon substrate and nanoparticles attached to a surface of the carbon substrate and/or an inner portion of the carbon substrate, and the nanoparticles include silicon and silicon carbide.

The silicon-carbon composite material satisfies a condition as follows:

$$R=[m \times P/2.21]/[1- m \times n/2.25] \times 100\%,$$

where R ranges from 20% to 80%,
where R is an accessible porosity and m is a true density with a unit of g/cm$^3$ in the silicon-carbon composite material, and n and P respectively are percentages by mass of a carbon element and a silicon element in the silicon-carbon composite material with a unit of wt%.

Further, the accessible porosity (R) of the silicon-carbon composite material ranges from 30% to 50%.

Further, in the silicon-carbon composite material, the percentage by mass of the carbon element ranges from 35 wt% to 90 wt%, preferably from 40 wt% to 70 wt%.

Further, in the silicon-carbon composite material, the percentage by mass of the silicon element ranges from 10 wt% to 65 wt%, preferably from 30 wt% to 50 wt%.

Further, in the silicon-carbon composite material, a percentage by mass of the silicon carbide ranges from 0 wt% to 20 wt%, excluding 0, preferably from 1 wt% to 20 wt%.

Further, a specific surface area of the carbon substrate ranges from 1 cm$^2$/g to 200 cm$^2$/g, and a porosity of the carbon substrate ranges from 1% to 50%.

Further, the carbon substrate is selected from at least one of artificial graphite, natural graphite, expanded graphite, flake graphite, multilayer graphene, multilayer graphene, hard carbon, soft carbon, mesocarbon microspheres, multilayer graphene, porous carbon, and hollow carbon microspheres.

The second aspect of the disclosure provides a preparation method of a silicon-carbon composite material, and the following steps are included.

In a carbon-silicon co-deposition step, carbon and silicon are co-deposited, by using a gaseous carbon source and a gaseous silicon source, on a carbon substrate by a first chemical vapor deposition, and an intermediate is obtained.

In a carbon coating step, a carbon coating layer is formed, by using a carbon source, on a surface of the intermediate by a second chemical vapor deposition, and the silicon-carbon composite material is obtained.

The silicon-carbon composite material includes an inner core and a carbon coating layer covering the inner core. The inner core includes a carbon substrate and nanoparticles attached to a surface of the carbon substrate and/or an inner portion of the carbon substrate, and the nanoparticles include silicon and silicon carbide.

The silicon-carbon composite material satisfies a condition as follows:

$$R=[m \times P/2.21]/[1- m \times n/2.25] \times 100\%,$$

where R ranges from 20% to 80%,
where R is an accessible porosity and m is a true density with a unit of g/cm$^3$ in the silicon-carbon composite material, and n and P respectively are percentages by mass of a carbon element and a silicon element in the silicon-carbon composite material with a unit of wt%.

Further, the silicon source is selected from at least one of monosilane (SiH$_4$), disilane, tetrachlorosilane, dimethyldichlorosilane, trimethyldichlorosilane, tetramethylsilane, trichlorosilane, tetrachlorosilane, methyl silicate, and ethyl silicate,

Further, the carbon source is selected from at least one of methane, ethane, acetylene, propane, and propylene.

Further, the carbon substrate is selected from at least one of artificial graphite, natural graphite, expanded graphite, flake graphite, multilayer graphene, multilayer graphene, hard carbon, soft carbon, mesocarbon microspheres, multilayer graphene, porous carbon, and hollow carbon microspheres.

Further, a reaction temperature of the first chemical vapor deposition and the second chemical vapor deposition is 400°C to 1000°C.

Further, when the intermediate is prepared, a deposition time of the first chemical vapor deposition is 2 hours to 16 hours, preferably 4 hours to 16 hours, more preferably 8 hours to 16 hours.

Further, when the carbon coating layer is prepared, the deposition time of the second chemical vapor deposition is 0.5 hours to 2 hours, preferably 1 hour to 2 hours.

The third aspect of the disclosure provides an electrochemical device including a negative electrode sheet. The negative electrode sheet includes a negative electrode current collector and a negative electrode active material layer disposed on the negative electrode current collector. The negative electrode active material layer includes a negative electrode active material. The negative electrode active material includes the silicon-carbon composite material according to the first aspect and/or the silicon-carbon composite material obtained through the method according to the second aspect.

The fourth aspect of the disclosure provides an electronic apparatus including the electrochemical device according to the third aspect of the disclosure.

As described above, the silicon-carbon composite material, the preparation method thereof, the electrochemical device, and the electronic apparatus exhibit the following beneficial effects.

The silicon-carbon composite material provided by the disclosure is a carbon-coated silicon-carbon composite material, in which silicon and carbon nanoparticles are uniformly distributed on the carbon substrate and limit each other. In this way, the adverse effects caused by volume expansion after silicon lithiation can be significantly lowered and the cycle stability of the material can be improved. By increasing the porosity in the silicon-carbon structure, deintercalation and intercalation of lithium during the charging and discharging process can be reduced, and electrochemical performance of the battery is improved. Further, the inclusion of an appropriate amount of silicon carbide in the silicon-carbon composite structure can increase the strength of the material particles, so that the cycle performance of the battery using this material as the negative electrode active material is significantly improved.

In the preparation method of the silicon-carbon composite material provided by the disclosure, the gaseous silicon and carbon sources are selected for chemical vapor co-deposition. Compared to the multi-step deposition method for preparing silicon and carbon on a substrate, in this method, the process steps are effectively decreased, the process flow time is shortened, and the production efficiency is greatly improved. Further, the production costs are reduced, and large-scale production is easy to achieve. Further, the CVD method adopted by the disclosure may effectively control the generation of the silicon carbide phase during the deposition process, allowing the nanoscale silicon and carbon to be uniformly distributed on the carbon substrate and limit each other. In this way, the adverse effects caused by volume expansion after silicon lithiation can be significantly lowered and the cycle stability of the material can be improved. When the silicon and carbon contents of the finished material are close, the silicon-carbon composite material prepared by co-deposition exhibits favorable cycle stability.

To sum up, the disclosure provides a silicon-carbon composite material exhibiting high comprehensive performance (such as high mass specific capacity and cycle stability) for the negative electrode of an electrochemical energy storage device such as a lithium-ion battery. The disclosure further provides a preparation method of the silicon-carbon composite material requiring low costs and simple preparation process steps, so that the problems of poor stability of quality during product preparation, poor cycle stability of the finished product material are solved. This preparation method is suitable for large-scale and industrial production. The silicon-carbon composite material provided by the disclosure could be used as the negative electrode active material applied in the negative electrode active material layer, made into the negative electrode sheet, and assembled with the positive electrode sheet, the separator, the electrolyte, and other components to form the electrochemical device such as a lithium-ion battery, so the electrical performance is significantly improved.

**DESCRIPTION OF THE EMBODIMENTS**

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

An embodiment of the disclosure provides a silicon-carbon composite material including an inner core and a carbon coating layer covering the inner core. The inner core includes a carbon substrate and nanoparticles uniformly attached to a surface of the carbon substrate and/or an inner portion of the carbon substrate, and the nanoparticles include silicon and silicon carbide.

The silicon-carbon composite material satisfies a condition as follows:

$$R=[m \times P/2.21]/[1 - m \times n/2.25] \times 100\%,$$

R ranges from 20% to 80%, preferably from 30% to 50%,

where R is an accessible porosity and m is a true density with a unit of $g/cm^3$ in the silicon-carbon composite material, and n and P respectively are percentages by mass of a carbon element and a silicon element in the silicon-carbon composite material with a unit of wt%.

In this embodiment, silicon and carbon nanoparticles in the silicon-carbon composite material are uniformly distributed on the carbon substrate and limit each other. In this way, the adverse effects caused by volume expansion after silicon lithiation may be significantly lowered and the cycle stability of the material may be improved. By increasing a porosity in the silicon-carbon structure, deintercalation and intercalation of lithium during the charging and discharging process may be reduced, and electrochemical performance of a battery may be improved. Further, the inclusion of an appropriate amount of silicon carbide in the silicon-carbon composite structure may increase the strength of the material particles, so that the cycle performance of the battery using this material as a negative electrode active material is significantly improved.

In some embodiments, in the silicon-carbon composite material, the percentage by mass of the carbon element is 35 wt% to 90 wt%, preferably 40 wt% to 70 wt%. The percentage by mass of the silicon element is 10 wt% to 65 wt%, preferably 30 wt% to 50 wt%. In the silicon-carbon composite material, a percentage by mass of the silicon carbide is 0 wt% to 20 wt%, excluding 0, preferably 1 wt% to 20 wt%, and more preferably 1 wt% to 10 wt%.

In some embodiments, a specific surface area of the carbon substrate is 1 $cm^2/g$ to 200 $cm^2/g$, and a porosity of the carbon substrate is 1% to 50%.

In some embodiments, the carbon substrate is selected from at least one of artificial graphite, natural graphite, expanded graphite, flake graphite, multilayer graphene, multilayer graphene, hard carbon, soft carbon, mesocarbon microspheres, multilayer graphene, porous carbon, and hollow carbon microspheres.

In some embodiments, the silicon material is selected from at least one of Si and $SiO_x$, and the silicon material is nanoscale. Preferably, a particle size of the silicon material is 2 nm to 20 nm. The silicon material is rod-shaped and/or granular, including but not limited to spherical, quasi-spherical, or needle-shaped particles.

An embodiment of the disclosure provides a preparation method of a silicon-carbon composite material, and the following steps are included.

In a carbon-silicon co-deposition step, carbon and silicon are co-deposited, by using a gaseous carbon source and a gaseous silicon source, on a carbon substrate by a first chemical vapor deposition, and an intermediate is obtained.

In a carbon coating step, a carbon coating layer is formed, by using a carbon source, on a surface of the intermediate by a second chemical vapor deposition, and the silicon-carbon composite material is obtained.

The silicon-carbon composite material includes an inner core and the carbon coating layer covering the inner core. The inner core includes the carbon substrate and nanoparticles attached to a surface of the carbon substrate and/or an inner portion of the carbon substrate, and the nanoparticles include silicon and silicon carbide.

The silicon-carbon composite material satisfies a relationship as follows:

$$R=[m\times P/2.21]/[1- m\times n/2.25] \times100\%,$$

R ranges from 20% to 80%, preferably from 30% to 50%,
where R is an accessible porosity and m is a true density with a unit of $g/cm^3$ in the silicon-carbon composite material, and n and P respectively are percentages by mass of a carbon element and a silicon element in the silicon-carbon composite material with a unit of wt%.

In this embodiment, the gaseous silicon and carbon sources are selected for chemical vapor co-deposition. Compared to the multi-step deposition method for preparing silicon and carbon on a substrate, in this method, the process steps are effectively decreased, the process flow time is shortened, and the production efficiency is greatly improved. Further, the production costs are reduced, and large-scale production is easy to achieve. Further, the CVD method adopted in this embodiment may effectively control the generation of the silicon carbide phase during the deposition process, allowing the nanoscale silicon and carbon to be uniformly distributed on the carbon substrate and limit each other. In this way, the adverse effects caused by volume expansion after silicon lithiation may be significantly lowered and the cycle stability of the material may be improved. Besides, by increasing the porosity in the silicon-carbon structure, deintercalating and intercalating of lithium during the charging and discharging process may be decreased, and the electrochemical performance of the battery may be improved.

In another embodiment of the disclosure, a preparation method of a silicon-carbon composite material includes steps as follows.

a) A carbon substrate is added to a deposition chamber, and an inert gas is introduced to exhaust the original air, so that a reaction chamber is filled with the inert gas, and a temperature is raised to a reaction temperature.
b) A gaseous silicon source, a gaseous carbon source, and a protective atmosphere gas are passed into a vacuum reaction chamber formed in step a), and a first chemical vapor deposition is performed, so that carbon and silicon are co-deposited on the carbon substrate, and an intermediate is obtained.

c) After the co-deposition is completed, the gaseous silicon source is cut off, and the gaseous carbon source and the protective atmosphere gas are kept flowing in, so that a stable carbon coating layer is formed on a surface of the intermediate obtained in step b), and the silicon-carbon composite material is obtained.

d) After the deposition is completed, other gas sources are interrupted, an inert gas is introduced, and after the temperature is cooled down to room temperature, the obtained silicon-carbon composite material is taken out.

In some embodiments, the silicon source is selected from at least one of monosilane ($SiH_4$), disilane, tetrachlorosilane, dimethyldichlorosilane, trimethyldichlorosilane, tetramethylsilane, trichlorosilane, tetrachlorosilane, methyl silicate, and ethyl silicate,

In some embodiments, the carbon source is selected from at least one of methane, ethane, acetylene, propane, and propylene.

In some embodiments, the carbon substrate is selected from at least one of artificial graphite, natural graphite, expanded graphite, flake graphite, multilayer graphene, multilayer graphene, hard carbon, soft carbon, mesocarbon microspheres, multilayer graphene, porous carbon, and hollow carbon microspheres.

In some embodiments, the reaction temperature of the first chemical vapor deposition and the second chemical vapor deposition are 400°C to 1000°C, preferably 500°C to 1000°C, more preferably 500°C to 800°C, for example, it may be 500°C, 510°C, 520°C, 530°C, 550°C, 580°C, 600°C, 620°C, 650°C, 680°C, or 700°C.

In some embodiments, when the intermediate is prepared, a deposition time of the first chemical vapor deposition is 2 hours to 16 hours, preferably 4 hours to 16 hours, more preferably 8 hours to 16 hours. During the cracking process of the silicon source and the carbon source, it is easy to react to form silicon carbide. By controlling the deposition time, a deposition proportion of each generated phase may be effectively regulated. When the deposition time increases, silicon and silicon carbide contents in the resulting composite increase.

In some embodiments, when the carbon coating layer is prepared, the deposition time of the second chemical vapor deposition is 0.5 hours to 2 hours, preferably 1 hour to 2 hours.

In some embodiments, when the intermediate is prepared, a flow ratio of the gaseous silicon source to the gaseous carbon source and to the protective atmosphere gas is 2: (1 to 4): (1 to 4), and a total flow rate is 1 L/min to 5 L/min.

In some embodiments, the first chemical vapor deposition reaction and the second chemical vapor deposition are carried out under slightly positive pressure, normal pressure, or negative pressure.

In some embodiments, the protective atmosphere gas for the first chemical vapor deposition and the second chemical vapor deposition includes hydrogen and inert gases. Preferably, a proportion of hydrogen in the protective atmosphere gas is not less than 80%. The inert gas is selected from at least one of nitrogen, helium, argon, and neon. During the cracking process of the silicon source and the carbon source, it is easy to react to form silicon carbide. By controlling a proportion of reducing gas hydrogen in the protective atmosphere gas, the deposition proportion of each generated phase may be effectively controlled, the proportion of the reducing gas hydrogen in the protective atmosphere gas is increased, and the content of silicon carbide in the obtained composite material may be decreased.

In some embodiments, the first chemical vapor deposition and the second chemical vapor deposition are performed in a chemical vapor deposition furnace, and the chemical vapor deposition furnace is selected from any one of a tubular furnace, a rotary furnace, and a fluidized bed.

It should be noted that the silicon-carbon composite material described in the above embodiments may be obtained through the method described in the above embodiments, but the disclosure is not limited thereto.

An embodiment of the disclosure provides a negative electrode sheet. The negative electrode sheet includes a negative electrode current collector and a negative electrode active material layer disposed on the negative electrode current collector. The negative electrode active material layer includes a negative electrode active material. The negative electrode active material includes the silicon-carbon composite material according to the above embodiments and/or the silicon-carbon composite material prepared and obtained through the method according to the above embodiments.

In some embodiments, in terms of percentage by mass, the negative electrode active material includes 24% to 45% of the silicon-carbon composite material.

An embodiment of the disclosure provides an electrochemical device including the negative electrode sheet as described in the above embodiments and including a positive electrode sheet, a separator, and an electrolyte.

The electrochemical device in the embodiments of the disclosure is any electrochemical device, such as but not limited to a lithium-ion battery or a sodium-ion battery.

The positive electrode sheet includes a positive electrode current collector and a positive electrode active material layer disposed on the positive electrode current collector. The positive electrode active material layer includes a positive electrode active material.

The positive electrode active material may generally be a lithium-containing composite oxide, and specific examples may be $LiMnO_2$, $LiFeO_2$, $LiMn_2O_4$, $Li_2FeSiO_4$, $LiNi_{1/3}Co_{1/3}Mn_{1/3}O_2$, $LiNi_5CO_2Mn_3O_2$, $Fi_zNi_{(1-x-y)}Co_xM_yO_2$

(where $0.01 \leq x \leq 0.20$, $0 \leq y \leq 0.20$, $0.97 \leq z \leq 1.20$, and M represents an element selected from at least one of Mn, V, Mg, Mo, Nb, and Al), $LiFePO_4$, and $Li_zCO_{(1-x)}M_xO_2$ (where $0 \leq x \leq 0.1$, $0.97 \leq z \leq 1.20$, and M represents an element selected from at least one of the group consisting of Mn, Ni, V, Mg, Mo, Nb, and Al).

Substances such as a conductive agent and a binder are usually added to the active material. According to different needs, the addition amount of the substances may be adjusted within 1% to 50% of the total mass of the positive electrode active material and may be adjusted within 55% to 76% of the total mass of the negative electrode active material.

The conductive agent is a reagent used to ensure that the electrode has good charging and discharging performance. The conductive agent may be, for example, a graphite material such as natural graphite and artificial graphite, a carbon black material such as conductive carbon black (Super P), acetylene black, Ketjen black, channel black, furnace black, lamp black, and thermal black, a conductive fiber such as a carbon fiber and a metal fiber, metal powder such as carbon fluoride powder, aluminum powder, and nickel powder, conductive whiskers such as metal powder, zinc oxide, and potassium titanate, and a conductive metal oxide such as titanium dioxide or a polyphenylene derivative.

The binder is a component that facilitates the bonding between the active material and the conductive agent and facilitates the bonding of the active material and the current collector. The binder may generally be selected from polyvinylidene fluoride, polyvinyl alcohol, polyacrylic acid (PAA), carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, styrene-acrylic rubber, fluororubber, and various copolymers.

The current collector, as a base material supporting the electrode active material, is usually a metal foil with a thickness of 3 microns to 500 microns. There is no particular limitation on the material of the current collector, as long as the material has high electrical conductivity and does not produce chemical reactions in the system of the secondary battery. For example, the material may be a foil material obtained by surface-treating nickel, titanium, aluminum, nickel, silver, stainless steel, carbon, or the like. The current collector usually has a smooth surface, but fine lines can also be formed on its surface to improve the adhesion between the positive electrode active material and the current collector. In addition to foil, the current collector may also adopt any one or a combination of various forms such as film, mesh, porous, foam, or non-woven fabric.

The separator is arranged between the positive electrode sheet and the negative electrode sheet, and an insulating film with high ion permeability and high mechanical strength is usually used. The separator typically has a thickness of 9 $\mu$m to 18 $\mu$m, a pore size of 5 $\mu$m to 300 $\mu$m, an air permeability of 180 s/100mL to 380 s/100mL, and a porosity of 30% to 50%. As a separator, a sheet or non-woven fabric made of an olefin polymer such as polypropylene and glass fiber or polyethylene, which is chemically resistant and hydrophobic, is used.

The electrolyte used in the lithium-ion battery usually includes a non-aqueous solvent, lithium salt, and an additive.

Herein, the non-aqueous solvent may be a conventional non-aqueous solvent in the art, preferably an ester solvent, more preferably a carbonate solvent. To be specific, the carbonate solvent may be selected from at least one of ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), and butylene carbonate (BC).

The lithium salt may be selected from at least one of $LiPF_6$, $LiBF_4$, $LiN(SO_2F)_2$ (abbreviated as LiFSI), $LiClO_4$, $LiAsF_6$, $LiB(C_2O_4)_2$ (abbreviated as LiBOB), $LiBF_2(C_2O_4)$ (abbreviated as LiDFOB), $LiN(SO_2R_F)_2$, and $LiN(SO_2F)(SO_2R_F)$. Preferably, the content of the lithium salt in the electrolyte is 5% to 20%.

The additive may be selected from at least one of vinylene carbonate (VC), fluoroethylene carbonate (FEC), vinylethylene carbonate (VEC), vinyl sulfate (DTD), vinylene sulfate, 1,3-propane sultone (PS), propene sultone, and 1,4-butane sultone. The typical amount of the additive used in the electrolyte is 1% to 4%, e.g., 2%, of the electrolyte.

In some embodiments, the negative electrode active material includes a silicon-carbon composite material, graphite, conductive carbon black, and a binder. Preferably, the negative electrode active material includes 1.6% to 45% of silicon-carbon composite material, 40% to 88.2% of graphite, 2% to 8% of conductive carbon black, and 2% to 18% of binder. More preferably, in terms of percentage by mass, the negative electrode active material includes 24% to 45% of silicon-carbon composite material, 40% to 63% of graphite, 2% to 8% of conductive carbon black, and 2% to 18% of binder

In some embodiments, a preparation method of the negative electrode sheet described in the above embodiments includes steps as follows.

The silicon-carbon composite material and the graphite are stirred and mixed at a high speed at a mass ratio of (2 to 50): (98 to 50) to prepare a mixed negative electrode active material powder. The mixed negative electrode active material powder is then fully stirred and mixed with the conductive carbon black and the binder in an appropriate amount of deionized water at a mass ratio of (80 to 90): (2 to 8): (2 to 18), and a uniform negative electrode slurry is formed. The negative electrode slurry is coated on a surface of a negative electrode current collector copper foil, and after drying and cold pressing, the negative electrode sheet is obtained.

It should be noted that in the abovementioned embodiments of the disclosure, details of other process conditions and parameters in the preparation process of the negative electrode sheet are not described in detail. A person having ordinary skill in the art can prepare the negative electrode sheet according to the method described in the abovementioned embodiments in combination with general or conventional technical means and general knowledge in the art.

An embodiment of the disclosure provides an electronic apparatus including the electrochemical device described in the above embodiments.

The electronic device of this embodiment in the disclosure is any electronic device, such as but not limited to a notebook computer, a pen input computer, a mobile computers, an e-book player, a portable telephone, a portable fax machine, a portable copier, a portable printer, stereo headphones, a videocassette recorder, liquid-crystal display TV, a portable cleaner, a portable CD player, a mini-disc, a transceiver, an electronic notepad, a calculator, a memory card, a portable recorder, a radio, backup power, a motor, a car, motorcycle, power-assisted bicycle, bicycle, a lighting appliance, a toy, a game console, a clock, a power tool, a flash lamp, a camera, a large-scale domestic storage batteries, or a lithium-ion capacitor and the like. It should be noted that the electrochemical device provided by the disclosure is not only applicable to the electronic devices listed above, but also applicable to an energy storage power station, a sea carrier, and an air carrier. The air carrier includes an air carrier within the atmosphere and an air carrier outside the atmosphere.

It should be noted that in the above embodiments of the disclosure, the method and steps of assembling the lithium-ion battery are not described in detail. A person having ordinary skill in the art can assemble the positive electrode sheet, the negative electrode sheet, the electrolyte, and the separator to form a lithium-ion battery according to general or conventional technical means and general knowledge in the art.

The following specific examples are given to illustrate the disclosure in detail. It should also be understood that the following examples are only used to specifically illustrate the disclosure and should not be construed as limiting the protection scope of the disclosure. Some non-essential improvements and adjustments made by a person having ordinary skill in the art based on the above contents of the disclosure all belong to the protection scope of the disclosure. The specific process parameters and the like in the following examples are only examples of suitable ranges. That is, a person having ordinary skill in the art can make a selection within a suitable range through the description herein, and are not limited to the specific numerical values exemplified below.

Example 1

A silicon-carbon composite material was prepared in this example through a specific preparation process as follows.

500g of carbon substrate was added to a deposition chamber, and an inert gas argon was introduced to exhaust the original air, so that a reaction chamber was filled with the inert gas, and a temperature was raised to a reaction temperature of 500°C.

b) Monosilane, ethylene, and protective atmosphere gas (Ar: $H_2$ = 80%: 20%) were passed into a vacuum reaction chamber formed in step a) according to a flow ratio of 1:1:3 and a total flow rate of 5L/min to perform a first chemical vapor deposition. The deposition time was 4 hours, so that carbon and silicon were co-deposited on the carbon substrate, and an intermediate was obtained.

c) After the co-deposition was completed, the monosilane gas was cut off, and the carbon source gas and the protective atmosphere gas were kept flowing in and deposited for 1 hour, so that a stable carbon coating layer was formed on a surface of the intermediate obtained in step b), and the silicon-carbon composite material was obtained.

d) After the deposition was completed, other gas sources were interrupted, an inert gas was introduced, and after the temperature was cooled down to room temperature, the obtained silicon-carbon composite material was taken out.

Example 2

In this example, a silicon-carbon composite material was prepared, and the preparation process was basically the same as that in Example 1, except that in step (b), the deposition time was 2 hours.

Example 3

In this example, a silicon-carbon composite material was prepared, and the preparation process was basically the same as that in Example 1, except that in step (b), the deposition time was 16 hours.

Example 4

In this example, a silicon-carbon composite material was prepared, and the preparation process was basically the same as that in Example 1, except that in step b), the protective atmosphere gas Ar: $H_2$ = 50%: 50%.

Example 5

In this example, a silicon-carbon composite material was prepared, and the preparation process was basically the same as that in Example 1, except that in step b), the protective atmosphere gas Ar: $H_2$ = 10%: 90%.

Example 6

In this example, a silicon-carbon composite material was prepared, and the preparation process was basically the same as that in Example 5, except that in step (b), the deposition time was 8 hours.

Example 7

In this example, a silicon-carbon composite material was prepared, and the preparation process was basically the same as that in Example 5, except that in step b), the protective atmosphere gas Ar: $H_2$ = 2%: 98%.

Example 8

In this example, a silicon-carbon composite material was prepared, and the preparation process was basically the same as that in Example 1, except that in step (b), a gaseous silicon source was introduced only.

Example 9

In this example, a silicon-carbon composite material was prepared, and the preparation process was basically the same as that in Example 1, except that in step b), the protective atmosphere gas Ar: $H_2$ = 2%: 98%, and the deposition time was 5 hours.

Comparative Example 1

In this comparative example, a carbon-coated silicon-carbon composite material was prepared, the preparation process was basically the same as that of Example 1, except that step c) was omitted.

Example 10

In this example, a lithium-ion battery was prepared by using the silicon-carbon composite material in Examples 1 to 9 according to the following method specifically as follows.

1. Preparation of Positive Electrode Sheet

A ternary material $LiNi_{0.8}Co_{0.1}Mn_{0.1}O_2$ was stirred and mixed at a high speed, and a mixed positive electrode active material powder material was prepared. Conductive carbon black (Super P), a conductive carbon tube (CNT), a nitrogen methyl pyrrolidone solvent (NMP), and polyvinylidene fluoride (PVDF) were dispersed and stirred at high speed for 2 hours at a mass ratio of 1: 0.5: 40: 1 to prepare a conductive slurry. The mixed active material powder material was stirred and mixed with the conductive slurry at a high speed to prepare a positive electrode slurry with a specific viscosity. The prepared slurry was uniformly coated on an aluminum foil with a scraper, placed in a blast drying oven, and dried at 120°C for 20 minutes. Finally, the dried electrode sheet was rolled and cut, and the positive electrode sheet was prepared.

2. Preparation of Negative Electrode Sheet

The prepared silicon-based material and graphite with a D50 of 10 $\mu$m were stirred and mixed at a high speed at a mass ratio of 40: 60 to prepare a mixed negative electrode active material powder material. The mixed negative electrode active substance powder material was then fully stirred and mixed with Super P and PAA (polyacrylic acid) in an appropriate amount of deionized water at a mass ratio of 85: 5: 10 to form a uniform negative electrode slurry. The negative electrode slurry was coated on a surface of a negative electrode current collector copper foil, and after drying and cold pressing, the negative electrode sheet was obtained.

3. Preparation of Electrolyte

The organic solvent was a mixture of ethylene carbonate (EC), ethyl methyl carbonate (EMC), and diethyl carbonate (DEC), where the volume ratio of EC, EMC, and DEC was 20: 20: 60. In an argon atmosphere glove box with a water content smaller than 10ppm, fully-dried lithium salt ($LiPF_6$) was dissolved in the abovementioned organic solvent, and the electrolyte was obtained after mixing evenly, where the concentration of $LiPF_6$ was 1mol/L.

4. Preparation of Separator

A 12 $\mu$m thick polypropylene separator was selected.

5. Preparation of Battery

The above-prepared positive electrode sheet, the separator, and the negative electrode sheet were sequentially stacked in a way that the separator was placed between the positive and negative electrode sheets for isolation. It was then covered with aluminum-plastic film, transferred to a vacuum oven at 120°C to dry, and sealed after injecting 3.0 g/Ah of electrolyte. After standing still, hot and cold pressing, formation, fixture, grading, and other processes, a pouch battery (i.e., a lithium-ion battery) with a capacity of 1 Ah was finally obtained.
According to the following method, the silicon-carbon composite material in Examples 1 to 9 were subjected to thermogravimetric testing specifically as follows.
A 5 mg sample was placed in a sample chamber, heated to 1400°C at a rate of 10 °C/min in an air atmosphere, and a mass change curve with temperature was collected.
According to the following method, the lithium-ion battery assembled in Example 10 was tested for electrical properties specifically as follows.
The assembled lithium-ion battery was charged to 4.2V at 1C constant current, charged to 0.05C at 4.2V at a constant voltage, left for 10 minutes, discharged at 1C constant current to 2.8V, and then left for 10 minutes. This was a cycle of charging and discharging, and the discharge capacity of this cycle was recorded. The charging and discharging process was repeated for 100 cycles, and the discharge capacity of each cycle was recorded.

$$\text{Cycle capacity retention (\%)} = 100^{\text{th}} \text{ cycle discharge capacity} / 1^{\text{st}} \text{ cycle discharge}$$

$$\text{capacity} \times 100\%;$$

$$\text{Mass energy density of the battery (Wh/kg)} = \text{the first discharge energy/battery mass.}$$

According to the following method, the lithium-ion battery assembled in Example 10 was tested for DCR specifically as follows:
The assembled lithium-ion battery was charged to 50% SOC, discharged at a rate of 4C for 30 seconds, and the initial discharge voltage was recorded as $V_1$. After discharging for 30 seconds, the voltage was $V_2$, the current was I, and the DCR was calculated according to the following formula:

$$DCR = (V_1 - V_2)/I.$$

The silicon-carbon composite materials in Examples 1 to 9 and Comparative Example 1 were analyzed and tested by inductively coupled plasma-emission spectroscopy (ICP-OES)) to obtain the contents of silicon, carbon, and silicon carbide, and the accessible porosity (R) was calculated according to the formula. The results are shown in Table 1.

| | Silicon content/ wt% | Carbon content/ wt% | Silicon carbide content/ wt% | Accessible porosity (R)/% | Capacity retention rate of 800 cycles/% | DCR/ mohm |
|---|---|---|---|---|---|---|
| Example 1 | 20.2 | 70.3 | 9.5 | 31.92 | 82.3 | 99.2 |
| Example 2 | 10.2 | 83.2 | 6 | 20.63 | 88.3 | 101.2 |
| Example 3 | 50.3 | 30.2 | 19.5 | 58.46 | 78.3 | 90.2 |
| Example 4 | 27.3 | 68.4 | 4.9 | 42.42 | 81.4 | 97.2 |
| Example 5 | 32.3 | 66.3 | 1.4 | 54.71 | 80.2 | 96.2 |
| Example 6 | 41.3 | 55.2 | 3.5 | 66.51 | 79.8 | 95.3 |
| Example 7 | 64.1 | 35.9 | 0 | 78.63 | 76.3 | 89.9 |
| Example 8 | 26.9 | 73.1 | 0 | 45.02 | 79.2 | 98 |
| Example 9 | 26.8 | 73.2 | 0 | 44.93 | 76.3 | 98 |
| Comparative Example 1 | 22.2 | 68.2 | 9.6 | 30.92 | 81.4 | 99.8 |
| Table 1: Test Results | | | | | | |

As can be seen from Table 1, comparing Example 2 to Examples 1 and 3, it is found that the longer the deposition time in step b), the higher the silicon and silicon carbide contents.

Comparing Example 1 to Examples 4, 5, 6, and 7, it is found that increasing the proportion of the reducing gas hydrogen in the protective atmosphere gas can effectively control the silicon carbide content in the material.

Comparing Example 1 to Examples 2, 3, 4, 5, 6, 7, and 8, it is found that a direct current resistance (DCR) of the lithium-ion battery is negatively correlated with the accessible porosity of the silicon-carbon composite material.

Comparing Example 1 to Example 8, it is found that after co-deposition, the generated silicon carbide phase can significantly improve the cycle performance of the lithium-ion battery using the negative electrode material.

Comparing Example 8 to Example 9, it is found that when the silicon and carbon contents of the finished material are close, the silicon-carbon composite material prepared by co-deposition exhibits favorable cycle stability.

Comparing Example 1 to Comparative Example 1, it is found that the surface carbon coating brought about by step c) is beneficial to the improvement of the cycle performance of the silicon-carbon composite material.

In view of the foregoing, through the embodiments of the disclosure, it can be found that co-deposition can improve the problem of the two-phase interface, and on the premise that the nanoscale is ensured, silicon and carbon are accompanied by two phases during the deposition process. Carbon can buffer the volume expansion of silicon during the charging and discharging process and improve the cycle performance of the material. Further, during the cracking process of the silicon source and the carbon source, it is easy to react to form silicon carbide. By changing the composition ratio of the protective atmosphere gas and the deposition time, the deposition ratio of each generated phase may be effectively controlled, especially the content of silicon carbide. By increasing the porosity in the silicon-carbon structure, the deintercalation and intercalation of lithium during the charging and discharging process is reduced, and the electrochemical performance of the lithium-ion battery is improved.

**Claims**

1. A silicon-carbon composite material, comprising an inner core and a carbon coating layer covering the inner core, wherein the inner core comprises a carbon substrate and nanoparticles attached to a surface of the carbon substrate and/or an inner portion of the carbon substrate, and the nanoparticles comprise silicon and silicon carbide,

    wherein the silicon-carbon composite material satisfies a relationship as follows:

$$R = [m \times P / 2.21] / [1 - m \times n / 2.25] \times 100\%,$$

wherein R ranges from 30% to 70%,

wherein R is an accessible porosity and m is a true density with a unit of g/cm$^3$ in the silicon-carbon composite material, and n and P respectively are percentages by mass of a carbon element and a silicon element in the silicon-carbon composite material with a unit of wt%.

2. The silicon-carbon composite material according to claim 1, wherein at least one of following conditions (a) to (d) is satisfied:

   (a) the accessible porosity (R) of the silicon-carbon composite material ranges from 30% to 50%,
   (b) in the silicon-carbon composite material, the percentage by mass of the carbon element ranges from 35 wt% to 90 wt%,
   (c) in the silicon-carbon composite material, the percentage by mass of the silicon element ranges from 10 wt% to 65 wt%, and
   (d) in the silicon-carbon composite material, a percentage by mass of the silicon carbide ranges from 0 wt% to 20 wt%, excluding 0.

3. The silicon-carbon composite material according to claim 1, wherein a specific surface area of the carbon substrate ranges from 1 cm$^2$/g to 200 cm$^2$/g, and a porosity of the carbon substrate ranges from 1% to 50%.

4. The silicon-carbon composite material according to claim 1, wherein the carbon substrate is selected from at least one of artificial graphite, natural graphite, expanded graphite, flake graphite, multilayer graphene, multilayer graphene, hard carbon, soft carbon, mesocarbon microspheres, multilayer graphene, porous carbon, and hollow carbon microspheres.

5. A preparation method of a silicon-carbon composite material, comprising:

   a carbon-silicon co-deposition step: co-depositing, by using a gaseous carbon source and a gaseous silicon source, carbon and silicon on a carbon substrate by a first chemical vapor deposition and obtaining an intermediate;
   a carbon coating step: forming, by using a carbon source, a carbon coating layer on a surface of the intermediate by a second chemical vapor deposition and obtaining the silicon-carbon composite material,
   wherein the silicon-carbon composite material comprises an inner core and the carbon coating layer covering the inner core, the inner core comprises the carbon substrate and nanoparticles attached to a surface of the carbon substrate and/or an inner portion of the carbon substrate, and the nanoparticles comprise silicon and silicon carbide,
   wherein the silicon-carbon composite material satisfies a relationship as follows:

   $$R=[m{\times}P/2.21]/[1- m{\times}n/2.25] {\times}100\%,$$

   wherein R ranges from 20% to 80%,
   wherein R is an accessible porosity and m is a true density with a unit of g/cm$^3$ in the silicon-carbon composite material, and n and P respectively are percentages by mass of a carbon element and a silicon element in the silicon-carbon composite material with a unit of wt%.

6. The preparation method of the silicon-carbon composite material according to claim 5, wherein at least one of following conditions (1) to (3) is satisfied:

   (1) the silicon source is selected from at least one of monosilane (SiH$_4$), disilane, tetrachlorosilane, dimethyldichlorosilane, trimethyldichlorosilane, tetramethylsilane, trichlorosilane, tetrachlorosilane, methyl silicate, and ethyl silicate,
   (2) the carbon source is selected from at least one of methane, ethane, acetylene, propane, and propylene, and
   (3) the carbon substrate is selected from at least one of artificial graphite, natural graphite, expanded graphite, flake graphite, multilayer graphene, multilayer graphene, hard carbon, soft carbon, mesocarbon microspheres, multilayer graphene, porous carbon, and hollow carbon microspheres.

7. The preparation method of the silicon-carbon composite material according to claim 5, wherein a reaction temperature of the first chemical vapor deposition and the second chemical vapor deposition is 400°C to 1000°C.

8. The preparation method of the silicon-carbon composite material according to claim 5, wherein when preparing the intermediate, a deposition time of the first chemical vapor deposition is 2 hours to 16 hours, or when preparing the carbon coating layer, a deposition time of the second chemical vapor deposition is 0.5 hours to 2 hours.

9. A electrochemical device comprising a negative electrode sheet, wherein the negative electrode sheet comprises a negative electrode current collector and a negative electrode active material layer disposed on the negative electrode current collector, the negative electrode active material layer comprises a negative electrode active material, and the negative electrode active material comprises the silicon-carbon composite material according to any one of claims 1 to 4.

10. An electronic apparatus, comprising the electrochemical device according to claim 9.

11. A electrochemical device comprising a negative electrode sheet, wherein the negative electrode sheet comprises a negative electrode current collector and a negative electrode active material layer disposed on the negative electrode current collector, the negative electrode active material layer comprises a negative electrode active material, and the negative electrode active material comprises the silicon-carbon composite material obtained through the method according to any one of claims 5 to 8.

Europäisches
Patentamt

European
Patent Office

Office européen
des brevets

# EUROPEAN SEARCH REPORT

Application Number

EP 23 20 9096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 363 430 A (LIYANG TIANMU PILOT BATTERY MATERIAL TECH CO LTD) 7 September 2021 (2021-09-07) * figure 1 * | 1-11 | INV. H01M4/04 H01M4/133 H01M4/134 H01M4/1393 |
| A | CN 108 172 775 A (HEFEI GUOXUAN HIGH TECH POWER ENERGY CO LTD) 15 June 2018 (2018-06-15) * claim 1; example 1 * | 1-11 | H01M4/1395 H01M4/36 H01M4/38 H01M4/587 |
| A | CN 113 066 970 A (NINGDE AMPEREX TECHNOLOGY LTD) 2 July 2021 (2021-07-02) * claim 1 * | 1-11 | |
| A | CN 115 642 233 A (BEIJING WELION NEW ENERGY TECH CO LTD) 24 January 2023 (2023-01-24) * claim 6 * | 1-11 | |
| A | CN 102 509 781 A (UNIV SHANGHAI JIAOTONG) 20 June 2012 (2012-06-20) * abstract * | 1-11 | TECHNICAL FIELDS SEARCHED (IPC) H01M |

The present search report has been drawn up for all claims

| Place of search | Date of completion of the search | Examiner |
|---|---|---|
| Munich | 21 May 2024 | González Junquera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 9096

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | | Publication date | Patent family member(s) | | Publication date |
|---|---|---|---|---|---|
| CN 113363430 | A | 07-09-2021 | NONE | | |
| CN 108172775 | A | 15-06-2018 | NONE | | |
| CN 113066970 | A | 02-07-2021 | NONE | | |
| CN 115642233 | A | 24-01-2023 | CN | 115642233 A | 24-01-2023 |
| | | | EP | 4345942 A1 | 03-04-2024 |
| CN 102509781 | A | 20-06-2012 | NONE | | |

EPO FORM P0459

For more details about this annex : see Official Journal of the European Patent Office, No. 12/82